# EUROPÄISCHE PATENTSCHRIFT

(11) **EP 2 181 273 B1**
(45) Veröffentlichungstag und Bekanntmachung des Hinweises auf die Patenterteilung: **24.08.2011**
(21) Anmeldenummer: 08803302.2
(22) Anmeldetag: 28.08.2008
(51) Int. Cl.: F16D 23/02

(54) **VERFAHREN ZUM HERSTELLEN EINES ZU EINER REIBPAARUNG GEHÖRENDEN KÖRPERS SOWIE ZU EINER REIBPAARUNG GEHÖRENDER KÖRPER**
METHOD FOR PRODUCING A BODY BELONGING TO A FRICTION PAIRING, AND BODY BELONGING TO A FRICTION PAIRING
PROCEDE DE FABRICATION D'UN CORPS FAISANT PARTIE D'UN COUPLE DE FRICTION, ET CORPS FAISANT PARTIE D'UN COUPLE DE FRICTION

(30) Priorität: 31.08.2007 DE 102007041218; 31.08.2007 DE 202007012150 U
(43) Veröffentlichungstag der Anmeldung: 05.05.2010
(73) Patentinhaber: Otto Fuchs KG, 58540 Meinerzhagen (DE)
(72) Erfinder: MÜNSTER, Jürgen, 58540 Meinerzhagen (DE); GUMMERT, Hermann, 41749 Viersen (DE)
(74) Vertreter: Haverkamp, Jens
(86) Internationale Anmeldenummer: PCT/EP2008/061276
(87) Internationale Veröffentlichungsnummer: WO 2009/027453

(56) Entgegenhaltungen:
- EP-A- 0 331 264
- EP-A- 1 429 044
- EP-A- 1 524 444
- DE-A1- 4 027 885
- DE-A1-102005 048 985
- GB-A- 2 006 352

## Beschreibung

Die Erfindung betrifft ein Verfahren zum Herstellen eines zu einer Reibpaarung gehörenden Körpers, etwa eines Synchronringes oder eines Zwischenringes, für ein synchronisiertes Schalt- oder Wechselgetriebe mit einer zum Zusammenwirken mit einem Gegenkörper dienenden Reibfläche, gebildet aus der Summe der auf den Gegenkörper zum Herbeiführen eines Gleichlaufs auf diesen wirkenden Kontaktflächen von einer Vielzahl von Reibkörpern, die durch winklig zur vorgesehenen Rotationsbewegung des Körpers verlaufende Nuten voneinander getrennt sind, wobei in einem ersten Schritt ein Körper mit endkonturnah vorgefertigten Reibkörpern bereitgestellt wird. Ferner betrifft die Erfindung einen zu einer Reibpaarung gehörender Körper, etwa ein Synchronring oder ein Zwischenring, für ein synchronisiertes Schalt- oder Wechselgetriebe mit einer zum Zusammenwirken mit einem Gegenkörper dienenden Reibfläche, gebildet aus der Summe der aus dem Gegenkörper zum Herbeiführen eines Gleichlaufs auf diesen wirkenden Kontaktflächen von einer Vielzahl von Reibkörpern, die durch winklig zur vorgesehenen Rotationsbewegung des Körpers verlaufende Nuten voneinander getrennt sind.

Ein derartiges Verfahren und ein derartiger körper sind z.B. aus EP 0 331 264 bekannt.

Bei synchronisierten Schalt- oder Wechselgetrieben werden die kraftschlüssig miteinander bei einem Gangwechsel zu verbindenden Wellen vor Herstellen des Kraftschlusses hinsichtlich ihrer Rotationsgeschwindigkeit synchronisiert. Zu diesem Zweck sind die einzelnen Gänge derartiger Getriebe einfach oder mehrfach synchronisiert. Zum Herstellen der Synchronisierung - des Gleichlaufes - werden Synchronringe verwendet. Diese verfügen über eine Reibfläche, die zum Herstellen der gewünschten Synchronisierung beispielsweise auf das Gangrad als Gegenkörper wirkt. Der Gegenkörper verfügt zu diesem Zweck über einen mit der Reibfläche des Synchronringes zusammenwirkenden Konus. Beide Elemente sind gegeneinander bewegbar. Der Gleichlauf wird durch Andrücken des Synchronringes mit seiner Reibfläche an den Konus des Gegenkörpers, beispielsweise des Gangrades bewirkt und zwar durch Herstellen eines Reibschlusses zwischen den beiden Elementen. Beide Elemente der Reibpaarung befinden sich in einer Ölumgebung.

Bei aus Messing hergestellten Synchronringen ist entweder die Konusfläche mit einem Belag beschichtet und verfügt über der Längsachse folgende Nuten oder, falls der Synchronring nicht beschichtet ist, sind in die Konusfläche derartige Nuten eingebracht oder dieser verfügt als öldurchbrechende Struktur über ein in die Konusfläche eingebrachtes Gewinde. Ein solches Gewinde kann zusätzlich von die einzelnen Gewindegänge durchbrechenden axial ausgerichteten Ölnuten zerteilt sein. Neben Synchronringen aus Messing sind auch Synchronringe aus einem gesinterten Stahlwerkstoff bekanntgeworden. Gemäß einer vorbekannten Ausgestaltung derartiger Synchronringe ist die Reibfläche durch stegartige Reibkörper, die durch Rillen voneinander getrennt sind, gebildet. Die zur Längsachse des Synchronringes weisenden Oberflächen der Reibkörper bilden jeweils die eigentliche Kontaktfläche aus, die zur Anlage auf der Konusfläche des Gegenkörpers dient. Somit stellt die Summe der Kontaktflächen die Reibfläche eines solchen Synchronringes dar. Bei derartigen Synchronringen hat es sich jedoch gezeigt, dass zum Erzielen des gewünschten Reibschlusses mit dem Konus des Gegenkörpers relativ hohe Kräfte aufgewendet werden müssen.

Ausgehend von diesem diskutierten Stand der Technik liegt der Erfindung daher die Aufgabe zugrunde, ein Herstellungsverfahren zum Herstellen eines einer Reibpaarung zugehörigen Körpers vorzuschlagen, mit dem derartige Körper hergestellt werden können, die grundsätzlich mit einer geringeren Kraft zum Erzielen des gewünschten Reibschlusses mit einem Gegenkörper gegen den Konus desselben gedrückt werden können. Der Erfindung liegt auch die Aufgabe zugrunde, einen solchen Körper vorzuschlagen.

Gelöst wird die verfahrensbezogene Aufgabe erfindungsgemäß durch das verfahren gemäß Anspruch 1.

Bei diesem Herstellungsverfahren werden in einem ersten Schritt die Reibkörper zunächst nur endkonturnah bereitgestellt, und zwar mit einem Aufmaß in radialer Richtung. Diese endkonturnah vorgefertigten Reibkörper weisen vor dem Durchführen des zweiten Schrittes eine größere Höhe (radiale Erstreckung) auf als nach Durchführen des zweiten Schrittes. Endkonturnah bedeutet im Zusammenhang mit diesen Ausführungen, dass die Kontur der die Reibkörper begrenzenden Nutenwände typischerweise vor Durchführen des zweiten Verfahrensschrittes bereits ihre Endkontur aufweisen. Die nach diesen Vorgaben vorgefertigten Reibkörper können einstückig mit dem Körper, beispielsweise dem Synchronring, durch Gießen, Schmieden oder Sintern ausgebildet worden sein. Gleichfalls ist es möglich, die endkonturnah vorgefertigten Reibkörper im Wege eines Reibbelages auf die diesbezügliche Konusfläche des Körpers aufgebracht zu haben, beispielsweise im Wege eines Spritzguss- oder Spritzpressverfahrens. Auch bei der Konzeption eines solchen, einen Reibbelag tragenden Körper als Teil einer Reibpaarung weisen die Reibkörper ein maßliches Aufmaß in radialer Richtung auf.

In einem zweiten Schritt erfolgt ein Materialabtrag in radialer Richtung der Reibkörper, wodurch die durch die Summe der Kontaktflächen der Reibkörper gebildete Reibfläche eingestellt wird. Im Zuge dieses Bearbeitungsschrittes wird die Höhe der einzelnen Reibkörper in radialer Richtung reduziert. Die Folge eines solchen Material abtragenden Bearbeitungsschrittes, der bei einem Körper, dessen Reibkörper aus Metall bestehen, typischerweise als spanender Bearbeitungsschritt ausgeführt werden dürfte, ist, dass sich durch den Materialabtrag Kanten an den in der vorgesehenen Rotationsrichtung weisenden Enden der Kontaktflächen ausbilden, die als scharfkantig angesprochen werden können. Diese Kanten weisen einen Radius von maximal 0,2 mm auf. Vorzugsweise ist der Radius noch kleiner. Diese Kanten werden zwischen den Kontaktflächen und den angrenzenden Nutenwänden gebildet. Die unmittelbare Folge dieses Materialabtrags unter Ausbildung der vorbeschriebenen Kanten ist, dass bei dem Prozess des Andrückens des Körpers, beispielsweise des Synchronringes, mit seiner Reibfläche an den Konus des Gegenkörpers der zwischen den Flächen befindliche Ölfilm bereits mit einer geringeren Kraft durchbrochen werden kann, da sich bei einer derartigen Reibfläche die Ausbildung einer hydrodynamischen Schmierung zwischen den Kontaktflächen der Reibkörper und dem Konus des Gegenkörpers vermieden ist. Dieses ist unmittelbare Folge der scharfkantigen Ausbildung der Kontaktflächenbegrenzungen. Die zwischen den Reibkörpern befindlichen Nuten weisen eine ausreichende Querschnittsfläche auf, um das an den Kanten der Reibkörper abgestreifte Öl aufnehmen und wegführen zu können.

Die Material abtragende Bearbeitung der Reibkörper in radialer Bearbeitungsrichtung hat bei Verwendung eines drehend angetriebenen Bearbeitungswerkzeuges neben der vorbeschriebenen Kantenausbildung zur Folge, dass die Kontaktflächen der einzelnen Reibkörper gekrümmt sind, und zwar in einem Radius, der dem Radius der die Kontaktflächen verbindenden Mantelfläche - der eigentlichen Reibfläche - entspricht. Die Folge ist, dass die Reibkörper mit einer größtmöglichen Kontaktfläche an dem Konus des Gegenkörpers anliegen können, was wiederum die notwendige Kraft zum Herbeiführen eines Reibschlusses gegenüber vorbekannten Ausgestaltungen reduziert. Somit trägt der vorbeschriebene Material abtragende Bearbeitungsschritt der Reibkörper in zweierlei Hinsicht dazu bei, dass ein Reibschluss mit dem Konus des Gegenkörpers mit geringerer Kraft herbeigeführt werden kann.

Bei einem Körper, dessen Reibkörper durch einen auf die Konusfläche des Körpers aufgebrachten Reibbelags gebildet sind, bringt der Material abtragende Bearbeitungsschritt noch einen weiteren Vorteil mit sich. Durch den Material abtragenden Bearbeitungsschritt wird naturgemäß die ursprüngliche Oberfläche zur Ausbildung der Kontaktflächen abgetragen, so dass die verschleißmindernden Zuschlagstoffe, beispielsweise die zerkleinerten Carbonfasern zutage treten. Reibbeläge, die aus einem duroplastischen Kunststoffmaterial hergestellt sind, weisen an ihrer Außenseite herstellungsbedingt einen Randbereich auf, in dem keine verschleißmindernde Zusatzstoffe oder diese in diesem Randbereich nur in einer untergeordneten Verteilungsdichte enthalten sind. Dies bedeutet, dass die Reibfläche eines solchen, einer Reibpaarung zugehörenden Körpers, in einer ersten Phase seines Betriebs einem größeren Verschleiß unterworfen ist als in einer späteren Phase, wenn sich diese Randschicht abgenutzt hat. Durch das vorbeschriebene Abtragen von Material in Richtung der Höhe der Reibkörper ist eine tribologische Veränderung durch Abtragen des bezüglich der Verteilungsdichte der verschleißmindernden Zuschlagsstoffe enthaltenen Randbereiches vermieden. Darüber hinaus wird durch das mechanische Aufschließen des oder der verschleißmindernden Zusatzstoffe die Einstellung des mit dem Konus des Gegenkörpers gewünschten Reibschlusses verbessert, was sich wiederum kraftreduzierend auf das Einstellen des gewünschten Reibschlusses auswirkt.

Der Material abtragende Bearbeitungsschritt kann beispielsweise als spanender Bearbeitungsschritt oder im Wege eines Fräsprozesses durchgeführt werden.

Gemäß einer bevorzugten Ausgestaltung wird der Material abtragende Bearbeitungsschritt nicht nur zum Einstellen der Reibfläche und zum Ausbilden der Kanten genutzt, sondern auch zur Kalibrierung des Körpers. Es ist nicht ungewöhnlich, dass die die endkonturnah vorgefertigten Reibkörper verbindende Mantelfläche exzentrisch zu der Achse einer weiteren Mantelfläche des Körpers angeordnet ist. Handelt es sich bei dem Körper beispielsweise um einen Synchronring mit einer innenliegenden Reibfläche stellt die Achse der äußeren Mantelfläche des Synchronringes die weiter Mantelfläche dar. Für einen bestimmungsgemäßen und möglichst verschleißfreien Betrieb eines solchen Synchronringes ist wünschenswert, wenn die Reibfläche und diese weitere Mantelfläche konzentrisch zueinander angeordnet sind, mithin die Achse der Reibfläche und diejenige der weiteren Mantelfläche koaxial sind. Im Zuge des Material abtragenden Bearbeitungsschrittes kann ein diesbezüglicher Exzentrizitätsausgleich vorgenommen werden. Dieses erfolgt, indem der Materialabtrag an zumindest einigen, einander bezüglich der Körperachse diametral gegenüberliegenden, vorgefertigten Reibkörpern ungleich ist, und zwar derart, dass durch diesen ein ungleich bezüglich der Reibkörper vorgesehener Materialabtrag eine Verschiebung der Achse der die Kontaktflächen verbindenden Mantelfläche zur Achse der weiteren Mantelfläche hin erfolgt, vorzugsweise so weit, dass beide Achsen koaxial sind. Erreichen lässt sich dieses beispielsweise dadurch, dass für die Durchführung des Material abtragenden Bearbeitungsschrittes der Körper, beispielsweise der Synchronring, mit der Achse seiner weiteren Mantelfläche, beispielsweise seiner Außenfläche, koaxial zur Rotationsachse des für die Durchführung des Material abtragenden Bearbeitungsschrittes eingesetzten Werkzeuges gehalten wird. Somit kann ohne weitere Bearbeitungsschritte notwendig zu machen, im Zuge der beiden vorbeschriebenen Schritte zudem eine Konzentrizität zwischen Reibfläche und einer weiteren Mantelfläche des Körpers eingestellt werden.

Die vorrichtungsbezogene Aufgabe wird erfindungsgemäß durch einen zu einer Reibpaarung gehörenden Körper gamäß Anspruch 10 gelöst.

Das Vorsehen einer im Zuge dieser Ausführung als scharfkantig besprochenen Begrenzung der Kontaktflächen begünstigt, wie bereits vorstehend dargelegt, den Ölabstreifprozess bei dem Erstellen eines Reibschlusses mit dem Konus eines Gegenkörpers. Die die Kontaktfläche eines Reibkörpers begrenzenden Nutenwände sind parallel oder quasi parallel zueinander verlaufend angeordnet. Dieses bedeutet, dass die Kontaktflächen mit der jeweils angrenzenden Nutenwand einen Winkel von 90° oder etwa 90° einschließen. Es hat sich gezeigt, dass ein solcher Winkel für den Prozess des Ölabstreifens besonders günstig ist. Zudem hat sich gezeigt, dass bei einer solchen Ausgestaltung die Kontaktfläche in Rotationsrichtung des Körpers länger und die freie Querschnittsfläche der angrenzenden Nuten größer ist. Dieses wirkt sich positiv auf das Einstellen des gewünschten Reibschlusses mit einer gegenüber vorbekannten, zu einer Reibpaarung gehörenden Körpern geringeren Kraft aus.

Für den vorstehend beschriebenen Herstellungsprozess hat die Parallelität oder die quasi-Parallelität der eine Kontaktfläche in der vorgesehenen Rotationsrichtung begrenzenden Nutenwände zudem den Vorteil, dass durch den Material abtragenden Bearbeitungsschritt unabhängig von der jeweiligen Höhe der Reibkörper die Größe der Kontaktfläche gleich bleibt oder zumindest keine nennenswerte Änderung erfährt. Dieses ist für eine Verfahrensausgestaltung, bei der auch ein Exzentrizitätsausgleich erfolgt, nicht unwesentlich. Die Parallelität oder quasi-Parallelität der die Kontaktflächen der Reibkörper begrenzenden Nutenwände hat auch beim laufenden Betrieb eines solchen Körpers den Vorteil, dass ein Verschleiß nicht zu einer Änderung der betragsmäßigen Größe der Summe der Kontaktflächen zu Folge hat. Somit ändert sich im Zuge der Lebensdauer eines solchen Körpers, eingebaut in ein Schalt- oder Wechselgetriebe, die Haptik beim Wechseln eines Ganges unter Verwendung dieses Körpers nicht.

Der im Rahmen dieser Ausführung benutzte Begriff "quasi-Parallelität" bezieht sich auf die zumeist nur geringe Höhe der Reibkörper und umfasst solche Ausgestaltungen, bei denen die Kontaktflächen mit den jeweils angrenzenden Nutenwänden Winkel zwischen 85 und 95° einschließen, wobei bei Abweichungen von einem Winkel von 90° Abweichungen zum Stumpfen hin bevorzugt sind.

Der Begriff "Vielzahl von Reibkörpern" schließt solche Ausgestaltungen ein, bei denen die Reibkörper nach Art einer Mikrorillierung konzipiert sind, ebenso wie Ausgestaltungen, bei denen über die Konusfläche des Körpers in Umfangsrichtung derselben nur eine geringe Anzahl an, sich über einen größeren Winkelbetrag erstreckende Reibkörper angeordnet sind.

Nachfolgend ist die Erfindung anhand eines Ausführungsbeispiels unter Bezugnahme auf die beigefügten Figuren beschrieben. Es zeigen:
- **Fig. 1:**: Eine perspektivische Ansicht eines Synchronringes mit ei- ner innen liegenden Reibfläche,
- **Fig. 2:**: einen vergrößerten Ausschnitt der Reibfläche des Syn- chronringes der Figur 1,
- **Fig. 3a, 3b:**: den Synchronring der Figur 1 nach einem ersten Ferti- gungsschritt (Figur 3a) und nach einem anschließenden spanenden Bearbeitungsschritt (Figur 3b) und
- **Fig. 4:**: einen vergrößerten Ausschnitt der Reibfläche eines Syn- chronringes gemäß einer weiteren Ausgestaltung.

Ein Synchronring 1 verfügt über eine innen liegende, konisch verjüngte Reibfläche 2. Die Reibfläche 2 dient zum Kontaktieren des Konus eines Gegenkörpers, beispielsweise eines Gangrades zum Herstellen eines Gleichlaufes (einer Synchronisation) zwischen dem Gegenkörper und dem

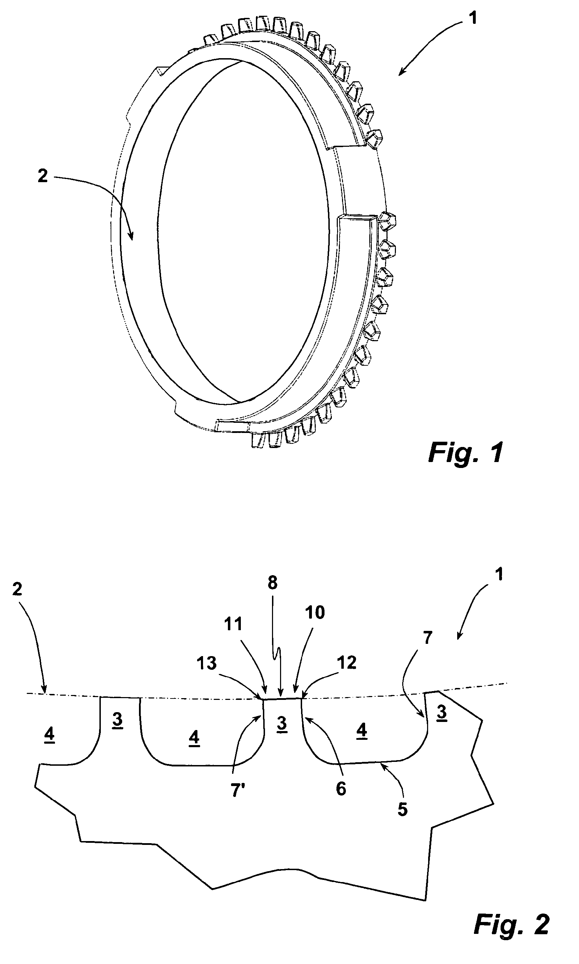

Synchronring 1. Die Reibfläche 2 ist in Figur 1 nur schematisiert und ohne ihre nachfolgend beschriebene Strukturierung gezeigt. Die Reibfläche 2 ist aufgebaut aus einer Vielzahl von Reibkörpern 3, die voneinander durch in axialer Richtung des Synchronringes 1 verlaufende Nuten 4 getrennt sind (vgl. Figur 2). Die Reibkörper 3 und die Nuten 4 bilden über den Umfang ein Rillenmuster aus. Dabei stellen die Nuten 4 die Rillen und die Reibkörper 3 die dazwischen liegenden Erhöhungen dar. Die Nuten 4 weisen einen in Umfangsrichtung gesehen zum Teil gekrümmten Boden 5 auf, der sich kontinuierlich im Wege eines relativ großen Radius in die angrenzenden Nutenwände 6, 7 fortsetzt. Die Reibkörper 3 tragen an ihrer zur Achse des Synchronringes 1 weisenden Seite jeweils eine Kontaktfläche 8. Die Kontaktfläche 8 ist diejenige Fläche, die auf den Konus des Gegenkörpers bei einem Synchronisationsvorgang wirkt. Die Reibfläche 2 des Synchronringes 1 ist durch die Summe der Kontaktflächen 8 der Reibkörper 3 gebildet. Die Kontaktfläche 8 eines jeden Reibkörpers 3 ist, da es sich bei der Reibfläche 2 um eine innen liegende Reibfläche handelt, konkav gekrümmt und zwar in einem Krümmungsradius, der der Krümmung der die Kontaktflächen 8 der einzelnen Reibkörper 3 verbindenden Mantelfläche - der Reibfläche 2 - entspricht. Die Kontaktflächen 8 grenzen bei dem dargestellten Ausführungsbeispiel an ihren beiden in Umfangsrichtung der Reibfläche 2 gesehenen Enden 10, 11 unter Ausbildung jeweils einer Kante 12, 13 an die benachbarte Nutenwand 6, 7'. Die Kontaktflächen 8 schließen mit den angrenzenden Nutenwänden 6, 7' wenn möglich einen Winkel von 90° ein. Sollte dieses aus fertigungstechnischen Gründen nicht möglich sein, kann ohne Einbuße der Funktionalität des Synchronringes der eingeschlossene Winkel ebenfalls etwas größer als 90° sein. Die zwischen den Kontaktflächen 8 und den angrenzenden Nutenwänden 6, 7' ausgebildeten Kante 12, 13 dienen als Ölabstreifer auf dem Gegenkonus bei dem Vorgang des Synchronisierens. Der Abstreifvorgang ist besonders effektiv, wenn die entgegen der Rotationsrichtung des Gegenkonus weisende Kante 12 oder 13 möglichst scharfkantig ausgebildet ist und die Nutenwand 6 oder 7' an ihrem oberen Abschluss mit dem Gegenkonus einen Winkel von etwa 90° einschließt. Dadurch ist das hydrodynamische Verhalten zwischen den Kontaktflächen 8 und der Konusfläche des Gegenkörpers zum Herstellen des gewünschten Gleichlaufes optimiert.

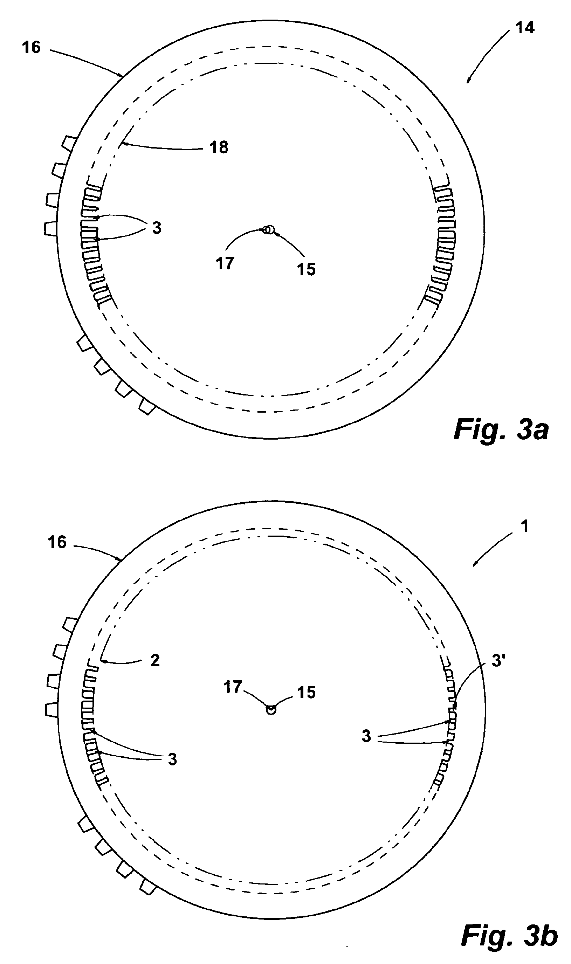

Der Synchronring 1 des dargestellten Ausführungsbeispiels ist aus einem Messingwerkstoff hergestellt. In einem ersten Schritt wurde ein Synchronringrohling 14 (vgl. Figur 3a) bereitgestellt, dessen Reibkörper 3 endkonturnah ausgebildet sind. Der Synchronringrohling 14 ist im Wege eines Schmiedeprozesses hergestellt worden. Der Einfachheit halber sind in den Figuren 3a und 3b nur einige Reibkörper 3 und nur einige Zähne der Außenverzahnung des Synchronringes 14 bzw. 1 dargestellt. Die Reibkörper 3 weisen in Bezug auf Ihre bestimmungsgemäße Endhöhe ein Aufmaß in radialer Richtung als Materialvorgabe auf. Diese werden somit mit einer größeren Höhe hergestellt, als benötigt. Typischerweise weisen die Reibkörper 3 der Reibfläche 2 nach diesem ersten Herstellungsschritt eine zur Achse des Synchronringrohlings 14 weisende konvexe Formgebung auf. Bei dem Vorgang des Schmiedens - gleiches gilt auch für andere Herstellungsprozesse, beispielsweise für den Prozess des Sinterns, sollte der Synchronring etwa aus einem gesinterten Stahlwerkstoff hergestellt werden - kann es vorkommen, dass die Achse 15 der äußeren Mantelfläche 16 nicht mit der Achse 17 der die Reibkörperrohlinge verbindende Mantelfläche 18 zusammenfällt und der Synchronring 1 aus diesem Grunde exzentrisch ist. Dieses ist bei dem Synchronringrohling 14, wie aus Figur 3a erkennbar, der Fall. Die Achse 17 der Mantelfläche 18 ist gegenüber der Achse 15 der äußeren Mantelfläche 16 des Synchronringrohlings 14 nach links verschoben. Für einen ordnungsgemäßen Einsatz des Synchronringes 1 ist es erforderlich, dass die Achsen 15, 17 gleichaxial (koaxial) zueinander angeordnet sind. Anderenfalls liegt die innere Mantelfläche 18 exzentrisch zur äußeren Mantelfläche 16 (vgl. Figur 3a).

Zum Ausbilden der Kontaktflächen 8 der Reibkörper 3 wird ein Material abtragender Bearbeitungsschritt zum Abtragen der konvexen Endabschnitte der durch den Schmiedeprozess zunächst erstellten Reibkörperrohlinge durchgeführt. Hierzu wird der Synchronring 1 mit seiner äußeren Mantelfläche 16 in einem Werkzeug dergestalt angeordnet und gehalten, dass die Achse 15 der äußeren Mantelfläche 16 mit der Achse eines rotatorisch angetriebenen Bearbeitungswerkzeuges identisch ist. Erfolgt in dieser Anordnung die abtragende Bearbeitung zum Erstellen der Kontaktflächen 8 der Reibkörper 3 durch Abtragen der konvexen Endabschnitte sowie eines bestimmten Abschnittes der Höhe derselben, wird hierdurch ohne weiteres Zutun ein Exzentrizitätsausgleich für den Fall durchgeführt, dass die Achse 17 der inneren Mantelfläche 18, wie dieses bei dem dargestellten Ausführungsbeispiel gezeigt ist, nach Bereitstellen des Synchronringrohlings 14 exzentrisch zur Achse 15 der äußeren Mantelfläche 16 angeordnet ist. Diese Bearbeitung hat zur Folge, dass im Ergebnis die Höhe der Reibkörper 3; ausgehend von einem Reibkörper 3 geringster Höhe, in die eine Richtung hin stetig und mit gleicher Rate zunimmt, und zwar bis zu einem Umkehrpunkt. Von diesem nimmt die Höhe der Reibkörper 3 stetig und mit gleicher Rate wiederum bis zu demjenigen mit der geringsten Höhe ab. In Figur 3b, in der der bei dem dargestellten Ausführungsbeispiel spanend bearbeitete Synchronringrohling 14 und damit der Synchronring 1 gezeigt ist, ist der Reibkörper mit der kleinsten Höhe mit dem Bezugszeichen 3' markiert. Die dadurch bedingte unterschiedliche Höhe der Reibkörper 3 bewegt sich in den Toleranzgrenzen des Schmiedevorganges und ist für den Einsatz des Synchronringes 1 ohne Auswirkung. Die die Kontaktflächen 8 der Reibkörper 3 begrenzenden Nutenwandungen 6, 7' verlaufen quasi parallel zueinander oder schließen nur einen Winkel kleiner als 5° ein. Daher ist die Querschnittsfläche der Reibkörper 3 und damit die Flächen der Kontaktflächen 8 in ihren mittleren Abschnitt unabhängig von deren Höhe gleich bleibend, zumindest annähernd gleich bleibend. Die verbleibende Resttiefe der Nuten 4 ist so konzipiert, dass diese eine ausreichende Querschnittsfläche aufweisen, damit durch diese die abzustreifende Ölmenge beim Vorgang des Synchronisierens abgeführt werden kann. Figur 3b zeigt den Synchronring 1 nach der spanenden Bearbeitung der durch die Reibkörperrohlinge gebildeten Reibfläche 2 des Synchronringrohlings 14.

Durch den Material abtragenden Bearbeitungsschritt ist nicht nur, wie vorbeschrieben, die Konzentrizität der Reibfläche 2 zur äußeren Mantelfläche 16 des Synchronringes 1 eingestellt worden, sondern durch diesen wurden zum Zwecke eines verbesserten Ölabstreifens scharfkantige Axialstrukturen - die Kanten 12, 13 - ausgebildet. Mit dem Material abtragenden Prozess, der bei den dargestellten Ausführungsbeispielen als spanender Bearbeitungsschritt durchgeführt worden ist, lassen sich die Kanten 12, 13 der Reibkörper 3 in einer Scharfkantigkeit ausbilden, die mit anderen formgebenden Maßnahmen nicht erreicht werden können. Ein Radius der Kanten 12, 13 ist letztendlich nur mikroskopisch erkennbar und beträgt in jedem Fall weniger als 0,2 mm, vorzugsweise sogar weniger als 0,1 mm.

Zur Material abtragenden Bearbeitung der Reibkörperrohlinge eignet sich jede Bearbeitung, bei der Material in radialer Richtung der Reibkörperrohlinge abgetragen werden kann, beispielsweise ein Fräsen, ein Schleifen oder auch ein Abtragen mittels eines Formbohrers. Ist ein Exzentrizitätsausgleich gewünscht ist wesentlich, dass die Werkzeugachse identisch mit der Achse der derjenigen Mantelfläche des zu bearbeitenden Synchronringes ist, an der die Kalibrierung erfolgt. Dieses ist bei dem dargestellten Ausführungsbeispiel die Achse 15 der äußeren Mantelfläche 16. Die vorbeschriebenen Synchronringe könne daher besonders wirtschaftlich hergestellt werden, wobei auch sichergestellt ist, dass die Mantelflächen des Synchronringes konzentrisch sind.

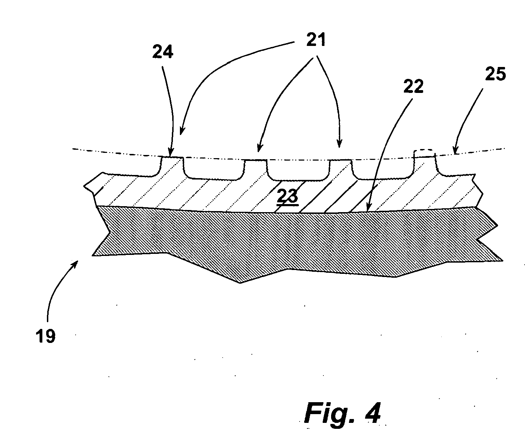

Figur 4 zeigt einen Ausschnitt eines weiteren, im Übrigen nicht näher dargestellten Synchronringes 19 mit seiner Reibfläche 20. Der Synchronring 19 ist prinzipiell aufgebaut wie der Synchronring 1. Im Unterschied zu dem Synchronring 19 sind die Reibkörper 21 des Synchronringes 19 Teil eines auf die innen liegende Konusfläche 22 des Synchronringes 19 aufgebrachten Reibbelages 23. Die die Kontaktflächen 24 verbindende Mantelfläche bildet bei diesem Ausführungsbeispiel die Reibfläche 25. Die Reibfläche 25 ist konzentrisch zur äußeren Mantelfläche des Synchronringes 19 angeordnet. Die Reibkörper 21 weisen scharfkantige Begrenzungen ihrer Kontaktflächen 24 auf. Die in Figur 4 gezeigte Kontur der Reibkörper 21 ist ebenso wie bei dem zuvor beschriebenen Ausführungsbeispiel durch einen Material abtragenden Bearbeitungsschritt eingestellt worden. Der Reibbelag 23 ist bei diesem Ausführungsbeispiel im Wege eines Kernprägeverfahrens auf die Konusfläche 22 des Synchronringkörpers aufgebracht worden. Die ursprüngliche radiale Erstreckung der Reibkörper 21 vor Durchführen des Material abtragenden Schrittes ist an dem rechten Reibkörper der Figur 4 beispielhaft gestrichelt gezeigt. Durch den Material abtragenden Bearbeitungsschritt ist nicht nur die Scharfkantigkeit der in Umfangsrichtung gesehenen Begrenzung der Kontaktflächen 24 und ein Exzentrizitätsausgleich, wie zu dem Ausführungsbeispiel der Figuren 1 bis 3 beschrieben, herbeigeführt worden, sondern zudem sind die in dem Reibbelag 23 enthaltenen verschleißmindernden Zuschlagsstoffe aufgeschlossen und liegen mithin unmittelbar an der Oberfläche der Kontaktflächen 24 der Reibkörper 21 an. Bei dem Reibbelag 23 handelt es sich bei dem dargestellten Ausführungsbeispiel um eine ausgehärtete Duroplastmasse, die als verschleißmindernden Zuschlagsstoff zerkleinerte Carbonfasern aufweist. Die Länge der Carbonfasern ist an das Herstellungsverfahren angepasst und weisen mithin nur eine solche Länge auf, dass unter Gewährleistung einer gleichmäßigen Verteilung innerhalb der Duroplastmasse diese in der beschriebenen Art und Weise auf die Konusfläche aufgebracht werden können.

Beschrieben sind im Wege von Ausführungsbeispielen Synchronringe mit einer innen liegenden Reibfläche. Gleichermaßen lässt sich die Erfindung auch bei einem Synchronring mit einer außen liegenden Reibfläche und/oder bei einem Synchronring mit einer innen liegenden und einer auβen liegenden Reibfläche oder auch bei anderen Körpern, die Teil einer Reibpaarung sind, verwirklichen.

### Bezugszeichenliste

- 1: Synchronring
- 2: Reibfläche
- 3: Reibkörper
- 4: Nut
- 5: Boden
- 6: Nutenwand
- 7, 7': Nutenwand
- 8: Kontaktfläche
- 10: Ende
- 11: Ende
- 12: Kante
- 13: Kante
- 14: Synchronringrohling
- 15: Achse
- 16: Mantelfläche
- 17: Achse
- 18: Mantelfläche
- 19: Synchronring
- 20: Reibfläche
- 21: Reibkörper
- 22: Konusfläche
- 23: Reibbelag
- 24: Kontaktfläche
- 25: Reibfläche

## Patentansprüche

1. Verfahren zum Herstellen eines zu einer Reibpaarung gehörenden Körpers, etwa eines Synchronringes (1, 19) oder eines Zwischenringes, für ein synchronisiertes Schalt- oder Wechselgetriebe mit einer zum Zusammenwirken mit einem Gegenkörper dienenden Reibfläche (2, 20), gebildet aus der Summe der auf den Gegenkörper zum Herbeiführen eines Gleichlaufs auf diesen wirkenden Kontaktflächen (8, 24) von einer Vielzahl von Reibkörpern (3, 21), die durch winklig zur vorgesehenen Rotationsbewegung des Körpers (1, 19) verlaufende Nuten (4) voneinander getrennt sind, wobei in einem ersten Schritt ein Körper (14) mit endkontumah vorgefertigten Reibkörpern (3, 21) bereitgestellt wird, **dadurch gekennzeichnet, dass** die die Kontaktfläche (8, 14) eines Reibkörpers (3, 21) begrenzenden Nutenwände (6, 7') parallel oder quasi parallel zueinander verlaufend ausgebildet werden und dass in einem nachfolgenden Schritt die durch die Summe der Kontaktflächen (8, 24) der Reibkörper (3, 21) gebildete Reibfläche (2, 20) im Wege eines von den endkontumah vorgefertigten Reibkörpern (3, 21) Material abtragenden Bearbeitungsschrittes eingestellt wird, wobei die KontaktfläChen (8, 24) der Reibkörper (3, 21) an ihren Nuten (4) begrenzten Enden unter Ausbildung einer Kante (12, 13) mit einem maximalen Radius von 0,2 mm an die benachbarte Nutenwand (6, 7') grenzen.

2. Verfahren nach Anspruch 1, **dadurch gekennzeichnet, dass** der von den endkontumah vorgefertigten Reibkörpern (3, 21) Material abtragende Bearbeitungsschritt dergestalt ausgeführt wird, dass zum Herbeiführen eines Exzentrizitätsausgleiches zwischen der die endkontumah vorgefertigten Reibkörper (3, 21) verbindenden Mantelfläche (18) und einer weiteren Mantelfläche (16) des Körpers (14) der Materialabtrag an zumindest einigen von einander bezüglich der Rotationsachse des Körpers (14) diametral gegenüberliegenden vorgefertigten Reibkörpern (3, 21) ungleich ist, und zwar dergestalt, dass die durch die Kontaktflächen (8, 24) der bearbeitete Reibkörper (3, 21) gebildete Reibfläche (2, 20) koaxial zu der weiteren Mantetfläche (16) des Körpers (1, 19) verläuft.

3. Verfahren nach Anspruch 2, **dadurch gekennzeichnet, dass** der Körper (14) zum Durchführen des Material abtragenden Bearbeitungsschrittes mit der Achse (15) seiner weiteren Mantelfläche (16) koaxial zur Rotationsachse des für die Durchführung dieses Schrittes eingesetzten Werkzeuges gehalten wird.

4. Verfahren nach einem der Ansprüche 1 bis 3, **dadurch gekennzeichnet, dass** ein solcher Körper (14) der Material abtragenden Bearbeitung unterworfen wird, dessen endkontumah vorgefertigte Reibkörper (3) aus demselben Werkstoff bestehen wie der Körper (14) selbst.

5. Verfahren nach einem der Ansprüche 1 bis 3, **dadurch gekennzeichnet, dass** ein solcher Körper (19) der Material abtragenden Bearbeitung unterworfen wird, dessen endkontumah vorgefertigte Reibkörper (21) als auf einer Konusfläche (22) des Körpers (19) aufgebrachter Reibbelag (23) ausgebildet sind.

6. Verfahren nach Anspruch 5, **dadurch gekennzeichnet, dass** der die endkontumah vorgefertigten Reibkörpern (21) bildende Reibbelag (23) im Wege eines Kunststoffsprkzguss- oder -pressverfahrens auf die Konusfläche (22) des Körpers (19) aufgebracht wird.

7. Verfahren nach Anspruch 6, **dadurch gekennzeichnet, dass** das Verfahren als Spritzpressverfahren, insbesondere als Kemprägeverfahren durchgeführt wird.

8. Verfahren nach Anspruch 5 oder 6, **dadurch gekennzeichnet, dass** zur Ausbildung des Reibbelags (23) eine Duroplastmasse mit verschleißmindernden Zuschlagstoffen verwendet wird.

9. Verfahren nach Anspruch 8, **dadurch gekennzeichnet, dass** die Duroplastmasse zerkleinerter Karbonfasem als verschleißmindernden Zuschlagstoff enthält.

10. Zu einer Reibpaarung gehörender Körper, etwa ein Synchronring (1, 19) oder ein Zwischenring, für ein synchronisiertes Schalt- oder Wechselgetriebe mit einer zum Zusammenwirken mit einem Gegenkörper dienenden Reibfläche (2, 20), gebildet aus der Summe der auf den Gegenkörper zum Herbeiführen eines Gleichlaufs auf diesen wirkenden Kontaktflächen (8, 24) von einer Vielzahl von Reibkörpern (3, 21), die durch winklig zur vorgesehenen Rotationsbewegung des Körpers (1, 19) verlaufende Nuten (4) voneinander getrennt sind, **dadurch gekennzeichnet, dass** der körper nach dem Verfahren nach einem der Ansprüche 1 bis 9 nergestellt ist.

11. Körper nach Anspruch 10, **dadurch gekennzeichnet, dass** die Kontaktflächen (8, 24) der Reibkörper (3, 21) in Umfangsrichtung der Reibfläche (2, 20) gesehen in einem .solchen Radius gekrümmt sind, der dem Radius der die Kontaktflächen (8, 24) der Reibkörper (3, 24) verbindenden Mantelfläche - der Reibfläche (2, 20) - entspricht.

12. Körper nach Anspruch 11, **dadurch gekennzeichnet, dass** die Krümmung der Kontaktflächen (8, 24) und die diese begrenzende Nutenwände (6, 7') mit den Kanten (12, 13) das Resultat eines Material abtragenden Bearbeitungsschrittes der Reibkörper (3, 21) ist.

13. Körper nach einem der Ansprüche 10 bis 12, **dadurch gekennzeichnet, dass** die Höhe der Reibkörper (3, 21), ausgehend von einem ersten, die geringste Höhe aufweisenden Reibkörper (3, 21), bis zu einem Umkehrpunkt stetig und mit gleichbleibender Rate zunimmt und ab dem Umkehrpunkt bis zu dem ersten Reibkörper stetig und mit gleichbleibender Rate abnimmt, und zwar dergestalt, dass die Achse (17) der die Kontaktflächen (8, 24) der Reibkörper (3, 21) verbindenden Mantelfläche der Achse (15) der Mantelfläche (16) des die Reibfläche (2, 20) tragenden Körpers (1, 19) entspricht.

14. Körper nach einem der Ansprüche 10 bis 13, **dadurch gekennzeichnet, dass** die durch die Kontaktflächen (8, 24) und diese begrenzende Nutenwände (6, 7') gebildeten Kanten (12, 13) der Reibkörper (3, 21) einen Radius aufweisen, der zwischen 0,01 und 0,1 mm beträgt.

15. Körper nach einem der Ansprüche 10 bis 14, **dadurch gekennzeichnet, dass** die Reibkörper (21) aus einem ein oder mehrere verschleißmindernde Zuschlagsstoffe enthaltenden Reibbelag (23) gebildet sind.

16. Körper nach Anspruch 15, **dadurch gekennzeichnet, dass** der Reibbelag (23) ein Duroplast mit zerkleinerten Carbonfasern als verschleißmindernden Zuschlagsstoff ist.

## Claims

1. Method for producing a body belonging to a friction pairing, for example a synchronizing ring (1, 19) or an intermediate ring, for a synchronized manual gearbox or variable-speed gearbox, with a frictional surface (2, 20) which serves to interact with a mating body and is formed from the sum of the contact surfaces (8, 24) of a multiplicity of frictional bodies (3, 21) which are separated from one another by grooves (4) running at an angle to the designated rotational movement of the body (1, 19), said contact surfaces acting on the mating body in order to bring about synchronism therewith, wherein, in a first step, a body (14) is provided with frictional bodies (3, 21) premanufactured close to the final shape, **characterized in that** the groove walls (6, 7') bounding the contact surface (8, 14) of a frictional body (3, 21) are designed to run parallel or virtually parallel to each other, and **in that**, in a following step, the frictional surface (2, 20) formed by the sum of the contact surfaces (8, 24) of the frictional bodies (3, 21) is adjusted during the course of a processing step in which material is removed from the frictional bodies (3, 21) premanufactured close to the final shape, wherein the contact surfaces (8, 24) of the frictional bodies (3, 21) are adjacent at their ends bounded by grooves (4) to the adjacent groove wall (6, 7'), forming an edge (12, 13) with a maximum radius of 0.2 mm.

2. Method according to claim 1, **characterized in that** the processing step in which material is removed from the frictional bodies (3, 21) premanufactured close to the final shape is carried out in such a way that, in order to compensate the eccentricity between the lateral surface (18) connecting the frictional bodies (3, 21) premanufactured close to the final shape and a further lateral surface (16) of the body (14), the removal of material on at least some premanufactured frictional bodies (3, 21) located diametrically opposite each other in relation to the axis of rotation of the body (14) is unequal, namely so that the frictional surface (2, 20) formed by the contact surfaces (8, 24) of the processed frictional bodies (3, 21) runs coaxial to the further lateral surface (16) of the body (1, 19).

3. Method according to claim 2, **characterized in that**, for carrying out the material-removing processing step, the body (14) is held with the axis (15) of its further lateral surface (16) coaxial to the axis of rotation of the tool used to carry out this step.

4. Method according to one of claims 1 to 3, **characterized in that** the body (14) subjected to the material-removing processing is one in which the frictional bodies (3) premanufactured close to the final shape are made of the same material as the body (14) itself.

5. Method according to one of claims 1 to 3, **characterized in that** the body (19) subjected to the material-removing processing is one in which the frictional bodies (21) premanufactured close to the final shape are configured as a friction lining (23) applied to a conical surface (22) of the body (19).

6. Method according to claim 5, **characterized in that** the friction lining (23) forming the frictional bodies (21) premanufactured close to the final shape is applied to the conical surface (22) of the body (19) in the course of a plastic injection moulding or transfer moulding method.

7. Method according to claim 6, **characterized in that** the method is carried out as a transfer moulding method, in particular as a compression moulding method.

8. Method according to claim 5 or 6, **characterized in that** a thermosetting plastics compound containing wear-reducing additives is used to form the friction lining (23).

9. Method according to claim 8, **characterized in that** the thermosetting plastics compound contains chopped carbon fibres as a wear-reducing additive.

10. Body belonging to a friction pairing, for example a synchronizing ring (1, 19) or an intermediate ring, for a synchronized manual gearbox or variable-speed gearbox, with a frictional surface (2, 20) which serves to interact with a mating body and is formed from the sum of the contact surfaces (8, 24) of a multiplicity of frictional bodies (3, 21) which are separated from one another by grooves (4) running at an angle to the designated rotational movement of the body (1, 19), said contact surfaces acting on the mating body in order to bring about synchronism therewith, **characterized in that** the body is produced by the method according to one of claims 1 to 9.

11. Body according to claim 10, **characterized in that** the contact surfaces (8, 24) of the frictional bodies (3, 21), as seen in the circumferential direction of the frictional surface (2, 20), are curved by a radius which corresponds to the radius of the lateral surface - the frictional surface (2, 20) - connecting the contact surfaces (8, 24) of the frictional bodies (3, 24).

12. Body according to claim 11, **characterized in that** the curvature of the contact surfaces (8, 24) and the groove walls (6, 7') bounding the latter with the edges (12, 13) is the result of a processing step in which material is removed from the frictional bodies (3, 21).

13. Body according to one of claims 10 to 12, **characterized in that** the height of the frictional bodies (3, 21), starting from a first frictional body (3, 21) having the smallest height, increases continuously and at a constant rate up to a turning point and decreases continuously and at a constant rate from the turning point to the first frictional body, namely in such a way that the axis (17) of the lateral surface connecting the contact surfaces (8, 24) of the frictional bodies (3, 21) corresponds to the axis (15) of the lateral surface (16) of the body (1, 19) carrying the frictional surface (2, 20).

14. Body according to one of claims 10 to 13, **characterized in that** the edges (12, 13) of the frictional bodies (3, 21) formed by the contact surfaces (8, 24) and groove walls (6, 7') bounding the latter have a radius of between 0.01 and 0.1 mm.

15. Body according to one of claims 10 to 14, **characterized in that** the frictional bodies (21) are formed from a friction lining (23) containing one or more wear-reducing additives.

16. Body according to claim 15, **characterized in that** the friction lining (23) is a thermosetting plastic containing chopped carbon fibres as a wear-reducing additive.

## Revendications

1. Procédé de fabrication d'un corps faisant partie d'un couple de friction, par exemple une bague de synchro (1, 19) ou une bague intermédiaire pour une transmission synchronisée ou boîte de vitesses comportant une surface de friction (2, 20) destinée à agir conjointement avec un contre-corps, conformé par la somme des surfaces de contact (8, 24) d'une multitude de corps de friction (3, 21), lesquelles agissent sur le contre-corps pour produire un mouvement synchronisé de ce dernier, lesquelles sont séparées les unes des autres par des rainures (4) au tracé angulaire par rapport au mouvement de rotation prévu du corps (1, 19), un corps (14) comportant des corps de friction (3, 14) préfabriqués aux contours proches de l'état final étant dans un premier temps mis à disposition, **caractérisé en ce que** les parois (6, 7') des rainures délimitant les surfaces de contact (8, 14) d'un corps de friction (3, 21) sont conformées pour s'étendre parallèlement ou quasi-parallèlement les unes par rapport aux autres et **en ce que**, au cours d'une étape suivante, la surface de friction (2, 20) formée par la somme des surfaces de contact (8, 24) des corps de friction (3, 21) est ajustée au moyen d'une étape d'usinage par enlèvement de matière sur les corps de friction (3, 21) préfabriqués aux contours proches de l'état final, les surfaces de contact (8, 24) des corps de friction (3, 21) étant contigües, par les extrémités délimitant leur rainures (4) en formant une arête (12, 13) avec un rayon maximal de 0,2 mm, à la paroi (6, 7') des rainures voisines.

2. Procédé selon la revendication 1 **caractérisé en ce que** l'étape d'usinage par enlèvement de matière sur les corps de friction (3, 21) préfabriqués aux contours proches de l'état final est réalisée de telle manière que, pour générer une compensation d'excentricité entre la surface d'enveloppe (18) qui relie les corps de friction (3, 21) préfabriqués aux contours proches de l'état final avec une autre surface d'enveloppe (16) du corps (14), l'enlèvement de matière sur au moins certains corps de friction (3, 21) préfabriqués, diamétralement opposés les uns aux autres par rapport à l'axe de rotation du corps (14), est inégal et ce, de telle sorte que la surface de friction (2, 20) formée par les surfaces de contact (8, 24) des corps de friction (3,21) à usiner s'étend de façon coaxiale par rapport à l'autre surface d'enveloppe (16) du corps (1, 19).

3. Procédé selon la revendication 2 **caractérisé en ce que** le corps (14) destiné à réaliser l'étape d'usinage par enlèvement de matière est maintenu par l'axe (15) de son autre surface d'enveloppe (16) de façon coaxiale par rapport à l'axe de rotation de l'outil utilisé pour réaliser cette étape.

4. Procédé selon l'une des revendications 1 à 3 **caractérisé en ce qu'**un tel corps (14) est soumis à un usinage par enlèvement de matière dont le corps de friction (3) préfabriqué aux contours proches de l'état final est constitué dans le même matériau que le corps (14) lui-même.

5. Procédé selon l'une des revendications 1 à 3 **caractérisé en ce qu'**un tel corps (19) est soumis à un usinage par enlèvement de matière dont le corps de friction (21) préfabriqué aux contours proches de l'état final est conformé en revêtement de friction (23) appliqué sur une surface conique (22) du corps (19).

6. Procédé selon la revendication 5 **caractérisé en ce que** le revêtement de friction (23) formant les corps de friction (21) préfabriqués aux contours proches de l'état final est appliqué dans le cadre d'un procédé de moulage par injection ou par compression sur la surface conique (22) du corps (19).

7. Procédé selon la revendication 6 **caractérisé en ce que** le procédé est réalisé en procédé de moulage par injection-transfert et notamment par injection-compression.

8. Procédé selon la revendication 5 ou 6 **caractérisé en ce qu'**on utilise, pour réaliser le revêtement de friction (23) une masse de duroplaste avec des additifs réduisant l'usure.

9. Procédé selon la revendication 8 **caractérisé en ce que** la masse de duroplaste contient, en guise d'additif réduisant l'usure, des fibres de carbone réduites.

10. Corps faisant partie d'un couple de friction, par exemple une bague de synchro (1, 19) ou une bague intermédiaire pour une transmission synchronisée ou boîte de vitesses, comportant une surface de friction (2, 20) destinée à agir conjointement avec un contre-corps, conformé par la somme des surfaces de contact (8, 24) d'une multitude de corps de friction (3, 21), lesquelles agissent sur le contre-corps pour produire un mouvement synchrone de ce dernier, lesquelles sont séparées les unes des autres par des rainures (4) au tracé angulaire par rapport au mouvement de rotation prévu du corps (1, 19) **caractérisé en ce que** le corps est fabriqué selon le procédé de l'une des revendications 1 à 9.

11. Corps selon la revendication 10 **caractérisé en ce que** les surfaces de contact (8, 24) des corps de friction (3,21) sont, considérées dans le sens périphérique de la surface de contact (2, 20), courbées selon un rayon qui correspond au rayon de la surface d'enveloppe - de la surface de friction (2, 20) - qui relie les surfaces de contact (8, 24) des corps de friction (3, 21).

12. Corps de friction selon la revendication 11 **caractérisé en ce que** la courbure des surfaces de contact (8, 24) et les parois des rainures (6, 7') qui limitent ces dernières, avec les arêtes (12, 13) résultent d'une étape d'usinage des corps de friction (3, 21) par enlèvement de matériel.

13. Corps selon l'une des revendications 10 à 12 **caractérisé en ce que** la hauteur des corps de friction (3, 21), en partant d'un premier corps de friction (3, 21) qui présente la plus petite hauteur jusqu'à un point de renvoi, augmente de façon constante et selon un taux restant identique et qu'à partir du point de renvoi jusqu'au premier corps de friction, elle diminue de façon constante et selon un taux restant identique et ce, de telle sorte que l'axe (17) de la surface de revêtement reliant les surfaces de contact (8, 24) des corps de friction (3, 21) correspond à la surface de revêtement (16) du corps (1, 19) supportant la surface de friction (2, 20).

14. Corps selon l'une des revendications 10 à 13 **caractérisé en ce que** les arêtes (12, 13) des corps de friction (3, 21), constituées par les surfaces de contact (8, 24) et les parois des rainures (6, 7') limitant ces dernières, présentent un rayon compris entre 0,01 et 0,1 mm.

15. Corps de friction selon l'une des revendications 10 à 14 **caractérisé en ce que** les corps de friction (21) sont conformés avec un revêtement de friction (23) contenant un ou plusieurs additifs réduisant l'usure.

16. Corps selon la revendication 15 **caractérisé en ce que** le revêtement de friction (23) est un duroplaste qui contient des fibres de carbone réduites en guise d'additif réduisant l'usure.
